**Europäisches Patentamt**

**European Patent Office**

**Office européen des brevets**

(19)

(11) Veröffentlichungsnummer: **0 202 449**
**B1**

(12) # EUROPÄISCHE PATENTSCHRIFT

(45) Veröffentlichungstag der Patentschrift:
**01.06.88**

(51) Int. Cl.⁴: **B 60 G 3/06,** B 60 G 13/00

(21) Anmeldenummer: **86104857.7**

(22) Anmeldetag: **09.04.86**

(54) **Unabhängige Fahrzeug-Radaufhängung.**

(30) Priorität: **24.04.85 DE 3514815**

(43) Veröffentlichungstag der Anmeldung:
**26.11.86 Patentblatt 86/48**

(45) Bekanntmachung des Hinweises auf die Patenterteilung:
**01.06.88 Patentblatt 88/22**

(84) Benannte Vertragsstaaten:
**DE FR GB IT SE**

(56) Entgegenhaltungen:
**DE - A - 1 580 480**
**DE - A - 2 924 368**
**DE - A - 3 331 282**
**FR - A - 1 237 255**
**FR - A - 2 202 790**
**FR - A - 2 333 658**
**FR - A - 2 365 453**
**US - A - 2 846 234**

(73) Patentinhaber: **BAYERISCHE MOTOREN WERKE Aktiengesellschaft, Postfach 40 02 40 Petuelring 130 - AJ-36, D-8000 München 40 (DE)**

(72) Erfinder: **Sautter, Wolfgang, Riesheimer Strasse 24, D-8032 Gräfelfing (DE)**

ACTORUM AG

**Beschreibung**

Die Erfindung bezieht sich auf eine unabhängige Fahrzeug-Radaufhängung, insbesondere für gelenkte Fahrzeugräder von Personenkraftwagen nach dem Oberbegriff des Hauptanspruchs.

Die DE-A-22 49 971 zeigt eine gattungsgemässe Radaufhängung, bei der das Traggelenk als Drehgelenk ausgelegt ist. Die Schwenkachse verläuft im wesentlichen in Fahrzeuglängsrichtung und weist einen Abstand zu der Wirkungslinie einer im Radaufstandspunkt angreifenden Hochkraft auf. Die Hochkraft bewirkt dadurch ein Moment, das in dem Dämpferbein Querkräfte hervorruft. Die Folge ist eine erhöhte Reibung zwischen den gleitenden Teilen des Dämpferbeines, die die Losbrechkräfte erhöht und den Federungskomfort beeinträchtigt.

Aufgabe der Erfindung ist es, eine gattungsgemässe Radaufhängung so weiterzubilden, dass das Dämpferbein weitgehend von derartigen Querkräften freigehalten wird.

Die Aufgabe wird erfindungsgemäss mit den kennzeichnenden Merkmalen des Hauptanspruchs gelöst. Vorteilhafte Ausführungen ergeben sich aus den Unteransprüchen.

Durch die Erfindung ergibt sich ein ideeller Gelenkpunkt der gelenkigen Verbindung zwischen Dämpferbein und Tragarm auf der Wirkungslinie der im Radaufstandspunkt angreifenden Hochkraft. Das Fahrzeugrad versucht beim Auftreten einer solchen Kraft um eine Achse zu kippen, die sich zwischen dem tragarmseitigen Universalgelenk und dem Traggelenk ausbildet. Da diese Achse erfindungsgemäss die Wirkungslinie der Hochkraft schneidet, wird ein unerwünschtes Moment im Dämpferbein verhindert.

Nach der Erfindung beaufschlagt die zwischen dem Fahrzeugaufbau und Rad wirkende Federkraft den aufbauseitigen Abschnitt des Tragarms. Das Scharniergelenk überträgt diese Kraft, sie wirkt demnach in der Gelenkachse. Da die Gelenkachse ebenfalls auf den Schnittpunkt zwischen der Wirkungslinie der Radaufstandskraft und der erwähnten Schwenkachse gerichtet ist, entsteht zwischen dem Kräftepaar Radaufstandskraft und Federkraft wiederum kein Moment.

Die Federkraft lässt sich durch eine zwischen dem aufbauseitigen Abschnitt des Tragarms und dem Fahrzeugaufbau angeordnete Schraubenfeder verwirklichen. Sie kann ebenso aber auch als Drehstabfeder ausgelegt sein, über die der Tragarm am Fahrzeugaufbau angelenkt ist. Schliesslich kann der aufbauseitige Abschnitt des Trägerarms eine Blattfeder darstellen. In einer besonders einfachen Ausführung besteht der Tragarm aus einem Kunststoff, der durch entsprechende Materialauswahl Federungseigenschaften aufweist. In diesem Fall können die Scharnierachsen durch Einkerbungen in der Art von Filmscharnieren ausgeformt sein.

In einer weiteren Ausführung besteht auch das den Zwischenlenker bildende Bauteil aus Kunststoff. Es kann dann mit dem Tragarm unter Bildung eines weiteren Scharniergelenks einstückig ausgeführt sein. Die Gelenkachse dieses Scharniergelenks schneidet in diesem Fall, wie die vorerwähnte Schwenkachse, die Wirkungslinie der Hochkraft.

Um ein belastungsfreies Dämpferbein zu erhalten, müsste bei herkömmlicher Bauart das Drehgelenk zwischen Radträger und Tragarm bis in die Radmitte hinein verschoben sein. Erst bei dieser Lage könnte die Hochkraft kein Moment in dem Dämpferbein bewirken. Für eine solche Anordnung des Drehgelenks ist jedoch in aller Regel kein Platz vorhanden, da der Raum von Bremsenteilen usw. beansprucht wird.

In der Praxis wird es nicht immer möglich sein, die Schwenkachse genau mit der Wirkungslinie der Hochkraft schneiden zu lassen. Der Schnittpunkt wird ggf. in der näheren Umgebung liegen. In diesem Fall entsteht selbstverständlich wieder ein das Dämpferbein belastendes Moment. Bleibt das Moment genügend klein, kann es vernachlässigt werden angesichts des mit der Erfindung erreichten Vorteils, das Traggelenk an einem von keinen anderen Fahrwerksteilen beanspruchten Platz vorzusehen.

Schneidet die Schwenkachse die Wirkungslinie der Hochkraft in Annäherung an die Fahrbahn, kann der Tragarm Längs- und Querkräfte in besonders vorteilhafter Weise aufnehmen. Ein solcher Verlauf der Schwenkachse lässt sich durch den Erfindungsgedanken in einfacher Weise dadurch erreichen, dass das tragarmseitige Gelenk des Zwischenlenkers in Fahrtrichtung gesehen höher angeordnet wird als das Traggelenk.

Die erfindungsgemässe Radaufhängung eignet sich in besonderer Weise für gelenkte Fahrzeugräder, ohne dass dabei ihre Anwendung für nicht gelenkte Räder ausgeschlossen wäre. Im Fall der Anwendung bei einem gelenkten Rad weist der Zwischenlenker dämpferbeinseitig ebenfalls ein Universalgelenk auf, durch dessen Gelenkmittelpunkt die Lenkachse des Fahrzeugrades verlaufen muss.

Ein vorteilhaftes Ausführungsbeispiel der Erfindung wird in der nachfolgenden Beschreibung anhand der dazugehörigen Zeichnung näher erläutert. Es zeigen

Fig. 1 eine erfindungsgemässe Radaufhängung in schematischer Darstellung und in Fahrtrichtung gesehen und

Fig. 2 die Draufsicht dieser Radaufhängung.

Die in der Zeichnung dargestellte unabhängige Radaufhängung soll für ein gelenktes Fahrzeugrad eines Personenkraftwagens vorgesehen sein. Dabei sind in den Figuren grösstenteils die Teile weggelassen, die für das Verständnis der Erfindung nicht notwendig sind.

Ein Fahrzeugrad 1 lagert auf einem Radträger 2. Der Radträger 2 ist über ein Dämpferbein 3 und einen Tragarm 4 am nicht dargestellten Fahrzeugaufbau oder daran befestigten Bauteilen, wie Fahrschemel usw., angelenkt. Das Dämpferbein 3 ist im wesentlichen vertikal ausgerichtet und fest mit dem Radträger 2 verbunden. Mit dem anderen Ende stützt sich das Dämpferbein 3 in einem Gelenklager 5 des Fahrzeugaufbaus ab.

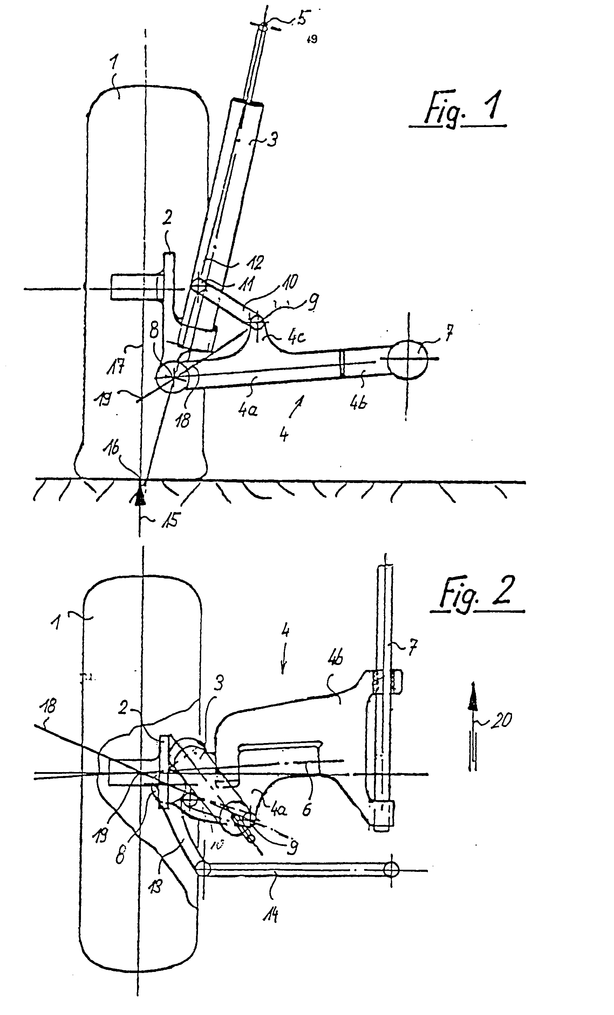

Nach Fig. 2 erstreckt sich der Tragarm 4 im wesentlichen quer zur Fahrzeuglängsrichtung. Die Fahrtrichtung trägt das Bezugszeichen 20. Ein Scharniergelenk mit der Gelenkachse 6 unterteilt ihn in einen radträgerseitigen Abschnitt 4a und einen aufbauseitigen Abschnitt 4b. Mit seinem aufbauseitigen Abschnitt 4b ist er über einen Drehfederstab 7 am Fahrzeugaufbau schwenkbar angelenkt. Die zwischen dem Fahrzeugrad 1 und dem Fahrzeugaufbau wirkende Federkraft wird demnach von diesem Drehfederstab 7 aufgebracht. An seinem radseitigen Abschnitt 4a weist der Tragarm 4 ein Universalgelenk 8 auf, über das er am Radträger 2 und damit am Dämpferbein 3 angelenkt ist. Schliesslich bildet der radseitige Abschnitt 4a einen höckerförmigen Fortsatz 4c aus, an dem über ein Universalgelenk 9 ein Zwischenlenker 10 befestigt ist. Das andere Ende des Zwischenlenkers 10 ist ebenfalls über ein Universalgelenk 11 am Dämpferbein 3 gelenkig gehalten. Dabei liegt das Universalgelenk 11 auf der Lenkachse des Fahrzeugrades 1, die in Fig. 1 mit 12 bezeichnet ist und sich aus der Verbindung zwischen dem Gelenklager 5 und dem Traggelenk 8 ergibt.

Schliesslich und der Vollständigkeit halber zeigt die Fig. 2 noch einen Lenkhebel 13, an dem eine zu einem nicht näher dargestellten Lenkgetriebe führende Spurstange 14 angreift.

Nach Fig. 1 greift eine Hochkraft 15 im Radaufstandspunkt 16 an. Diese Hochkraft 15 ist durch das Gewicht des Fahrzeuges gegeben und kann sich beim Fahrbetrieb durch Unebenheiten der Fahrbahn erhöhen oder verringern. Die Wirkungslinie der Hochkraft 15 trägt das Bezugszeichen 17; sie verläuft senkrecht nach oben.

Wie nun aus Fig. 1 ersichtlich, schneidet die Verbindungslinie 18 zwischen dem tragarmseitigen Universalgelenk 9 des Zwischenlenkers 10 und dem Traggelenk 8 die Wirkungslinie 17 in dem Schnittpunkt 19. In Fig. 2 wird dieser Schnittpunkt 19 ebenfalls ersichtlich, darüber hinaus zeigt diese Figur, dass die Achse 6 des Scharniergelenks ebenfalls auf diesen Schnittpunkt 19 gerichtet ist und demnach in ihrer Verlängerung durch ihn verläuft.

Die Hochkraft 15 vermag durch diese Auslegung nicht das Fahrzeugrad 1 um die Achse, dargestellt durch die Verbindungslinie 18, zu drehen. Ausserdem ist durch den Verlauf der Scharnierachse sichergestellt, dass zwischen der Wirkungslinie 17 der Hochkraft 15 und der auf den aufbauseitigen Abschnitt 4b des Tragarms 4 einwirkenden Federkraft kein Versatz auftritt, der ein unerwünschtes Moment auslösen könnte.

## Patentansprüche

1. Unabhängige Fahrzeug-Radaufhängung, insbesondere für gelenkte Fahrzeugräder von Personenkraftwagen, mit einem Dämpferbein, das über ein Traggelenk mit einem im wesentlichen quer zur Fahrzeuglängsachse verlaufenden und am Fahrzeugaufbau angelenkten Tragarm verbunden ist, wobei der Tragarm eine zwischen dem Fahrzeugaufbau und dem Fahrzeugrad wirkende Federkraft überträgt, gekennzeichnet durch folgende Merkmale:

— das Traggelenk (8) ist als Universalgelenk ausgelegt;

— ein Zwischenlenker (10) verbindet zusätzlich das Dämpferbein (3) mit dem Tragarm (4) und ist wenigstens am Tragarm (4) mit einem Universalgelenk (9) angeschlossen;

— die Verbindungslinie (18) zwischen dem tragarmseitigen Universalgelenk (9) des Zwischenlenkers (10) und dem Traggelenk (8) schneidet in ihrer Verlängerung die Wirkungslinie (17) einer im Radaufstandspunkt (16) wirkenden Hochkraft (15) (Schnittpunkt 19);

— der Tragarm (4) ist durch ein Scharniergelenk in einen radseitigen und einen aufbauseitigen, mit der Federkraft beaufschlagten Abschnitt (4a; 4b) unterteilt, wobei die Scharnierachse (6) auf den Schnittpunkt (19) gerichtet ist.

2. Radaufhängung nach Anspruch 1, dadurch gekennzeichnet, dass der Zwischenlenker (10) dämpferbeinseitig ein Universalgelenk (11) aufweist, dessen Gelenkmittelpunkt auf der Verbindungslinie (12) zwischen dem Gelenklager (5) des Dämpferbeins (3) und Traggelenk (8) liegt.

3. Radaufhängung nach Anspruch 1 oder 2, dadurch gekennzeichnet, dass das tragarmseitige Universalgelenk (9) des Zwischenlenkers (10) eine in Fahrtrichtung gesehen höhere Lage einnimmt gegenüber dem Traggelenk (8).

4. Radaufhängung nach einem der Ansprüche 1-3, dadurch gekennzeichnet, dass der Tragarm (4) aus einem Federeigenschaften aufweisenden Kunststoff besteht.

5. Radaufhängung nach Anspruch 4, dadurch gekennzeichnet, dass das Scharniergelenk durch Einkerbungen in der Ober- und Unterseite des Tragarms in der Art eines Filmscharniers gebildet ist.

6. Radaufhängung nach Anspruch 5, dadurch gekennzeichnet, dass der Zwischenlenker (10) einstückig mit dem Tragarm (4) ausgebildet ist mit einem weiteren Scharniergelenk, dessen Gelenkachse die Schwenkachse (18) bildet.

7. Radaufhängung nach einem der Ansprüche 1-6, dadurch gekennzeichnet, dass der aufbauseitige Abschnitt (4b) des Tragarms (4) über ein Drehgelenk am Fahrzeugaufbau befestigt ist mit einem als Gelenkachse dienenden Drehfederstab (7).

## Claims

1. An independent vehicle wheel suspension, in particular for steered vehicle wheels of motor cars, with a damper strut, which is connected via a support joint with a support arm, which runs substantially transversely to the longitudinal axis of the vehicle and is articulated to the vehicle body, in which the support arm transfers an elastic force acting between the vehicle body and the vehicle wheel, characterized by the following features:

— the support joint (8) is designed as a universal joint;

— an intermediate guide (10) additionally connects the damper strut (3) with the support arm (4) and is joined with a universal joint (9) at least to the support arm (4);

— the connection line (18) between the universal joint (9) of the intermediate guide (10) on the support arm side and the support joint (8) intersects in its extension the line of action (17) of an upward force (15) acting in the standing point (16) of the wheel (point of intersection 19);

— the support arm (4) is divided by a hinge joint into a section on the wheel side and a section on the body side, acted upon by the elastic force (4a; 4b), in which the hinge axis (6) is directed to the point of intersection (19).

2. A wheel suspension according to claim 1, characterized in that the intermediate guide (10) has a universal joint (11) on the damper strut side, the central point of which joint lies on the connection line (12) between the joint bearing (5) of the damper strut (3) and the support joint (8).

3. A wheel suspension according to claim 1 or 2, characterized in that the universal joint (9) of the intermediate guide (10), on the support arm side, assumes a higher position with respect to the support joint (8) viewed in the direction of travel.

4. A wheel suspension according to one of claims 1-3, characterized in that the support arm (4) consists of a plastic which has elastic qualities.

5. A wheel suspension according to claim 4, characterized in that the hinge joint is formed by indents in the upper side and underside of the support arm in the manner of a film hinge.

6. A wheel suspension according to claim 5, characterized in that the intermediate guide (10) is constructed in one piece with the support arm (4), with a further hinge joint, the joint axis of which forms the axis of orientation (18).

7. A wheel suspension according to one of claims 1-6, characterized in that the section (4b) of the support arm (4), on the body side, is secured to the vehicle body via a swivel joint with a torsion spring bar (7) serving as joint axis.

**Revendications**

1. Suspension indépendante d'essieu de véhicule, en particulier pour essieu articulé de véhicule de tourisme, comportant un montant d'amortisseur qui est relié par un joint porteur à un bras-support s'étendant pratiquement perpendiculairement à l'axe longitudinal du véhicule et au châssis de ce dernier, le bras porteur transmettant une force de ressort s'exerçant entre le châssis du véhicule et l'essieu, caractérisée en ce que:

— le joint porteur (8) est conçu comme un joint universel;

— l'articulation intermédiaire (10) relie de plus le montant d'amortisseur (3) au bras porteur (4) et est reliée au moins au bras porteur (4) par un joint universel (9);

— la ligne de jonction (18) entre le point universel (9) de l'articulation intermédiaire (10) côté bras porteur et le joint porteur (8) coupe sur son prolongement la ligne d'action de la force d'entraînement (15) agissant au point d'appui de la roue (16) (point d'intersection 19);

— le bras porteur (4) est divisé par une articulation à charnière en section côté roue et en section côté châssis (4a, 4b) rappelée par la force d'un ressort, l'axe de la charnière (6) étant dirigé vers le point d'appui (19).

2. Suspension d'essieu de véhicule selon la revendication 1, caractérisée en ce que l'articulation intermédiaire (10) comporte du côté du montant d'amortisseur un joint universel (11) dont le centre d'articulation se trouve sur la ligne de liaison (12) entre l'articulation à rotule (5) du montant d'amortisseur (3) et le joint porteur (8).

3. Suspension d'essieu de véhicule selon la revendication 1 ou la revendication 2, caractérisée en ce que le joint universel (9) de l'articulation intermédiaire (10) côté bras porteur occupe par rapport au joint porteur (8) une position plus élevée considérée dans le sens de circulation du véhicule.

4. Suspension d'essieu de véhicule selon les revendications 1 à 3, caractérisée en ce que le bras porteur (4) est constitué d'une manière synthétique présentant des propriétés d'élasticité.

5. Suspension d'essieu de véhicule selon la revendication 4, caractérisée en ce que l'articulation à charnière est formée par des gorges dans les parties supérieure et inférieure du bras porteur, selon la technique de la charnière à feuille.

6. Suspension d'essieu de véhicule selon la revendication 5, caractérisée en ce que l'articulation intermédiaire (10) forme une seule pièce avec le bras porteur (4) et avec une autre articulation à charnière dont l'axe d'articulation forme l'axe de pivotement (18).

7. Suspension d'essieu de véhicule selon l'une des revendications 1 à 6, caractérisée en ce que la section (4b) du côté châssis du bras porteur (4) est fixée, par une articulation pivotante, au châssis du véhicule par une barre de torsion tournante (7) servant d'axe d'articulation.

_Fig. 1_

_Fig. 2_